# FASCICULE DE BREVET EUROPEEN

(11) **EP 3 491 628 B1**
(45) Date de publication et mention de la délivrance du brevet: **01.07.2020**
(21) Numéro de dépôt: 17742453.8
(22) Date de dépôt: 27.07.2017
(51) Int. Cl.: G08B 13/196, G08B 15/00

(54) **SYSTEME DE SURVEILLANCE D'UN TERRAIN, TEL QU'UN TERRAIN DE GOLF**
SYSTEM ZUR ÜBERWACHUNG EINES STÜCK LANDS, WIE ETWA EIN GOLFPLATZ
SYSTEM FOR MONITORING A PIECE OF LAND, SUCH AS A GOLF COURSE

(30) Priorité: 01.08.2016 FR 1657461
(43) Date de publication de la demande: 05.06.2019
(73) Titulaire: Cordon Electronics, 22100 Taden (FR)
(72) Inventeur: BELLANGER, Amandine, 74940 Annecy (FR)
(74) Mandataire: Cabinet Le Guen Maillet
(86) Numéro de dépôt international: PCT/EP2017/068974
(87) Numéro de publication internationale: WO 2018/024593

(56) Documents cités:
- WO-A1-2016/145447
- US-A1- 2004 113 777
- US-A1- 2009 303 042

## Description

La présente invention concerne un système de surveillance d'un terrain, comme par exemple un terrain de golf.

Les propriétaires de terrains, tels que des terrains de golf, sont confrontés à des actes de malveillance suite à des intrusions sur ces terrains. Il existe des systèmes de surveillance à base de caméras qui permette à un opérateur, ou utilisateur, de visualiser depuis une station de surveillance ce qui se passe sur le terrain. De tels terrains peuvent en outre être vastes, comme les terrains de golf, et être en plein air, donc difficiles à sécuriser.

Le document US2009303042 divulgue un ensemble de détecteurs d'intrusion reliés par un réseau sans fil. Des robots s'orientent à l'aide du réseau pour se diriger vers l'endroit de l'intrusion.

Il est ainsi souhaitable de fournir une solution qui permette de surveiller un terrain donné, plus particulièrement un terrain de golf, de détecter d'éventuelles intrusions et de réagir aux intrusions de sorte à les faire cesser. Il est souhaitable de dénaturer le moins possible le terrain pour effectuer la surveillance. Il est notamment souhaitable de fournir une solution qui permette en outre de dissuader des individus malveillants d'effectuer des intrusions sur le terrain. Il est notamment souhaitable de fournir une solution qui soit efficace et simple à déployer.

L'invention concerne un système de surveillance d'un terrain, comportant une station de surveillance et au moins un capteur de surveillance placé sur un point haut de sorte à couvrir ledit terrain, ledit au moins un capteur de surveillance comportant des moyens pour fournir à la station de surveillance des images en temps-réel du terrain, la station de surveillance comportant des moyens pour analyser des images successives reçues dudit au moins un capteur de surveillance en recherchant des différences entre lesdites images successives pour détecter des mouvements représentatifs d'une intrusion sur le terrain. Le système de surveillance du terrain comporte en outre au moins un véhicule de dissuasion connecté par une liaison sans-fil avec la station de surveillance, et la station de surveillance comporte : des moyens pour obtenir une carte de référence représentative de la géométrie du terrain ; des moyens pour, lorsque la station de surveillance détecte un mouvement représentatif d'une intrusion sur le terrain dans les images reçues dudit au moins un capteur de surveillance, retrouver dans lesdites images des repères géo-référencés du terrain et déterminer une position d'intrusion dans le terrain à partir desdites images et des positions desdits repères géo-référencés dans la carte de référence ; des moyens pour transmettre à au moins un dit véhicule de dissuasion une information représentative de la position d'intrusion déterminée et des instructions de déplacement dudit véhicule de dissuasion jusqu'à la position d'intrusion déterminée. De plus, chaque véhicule de dissuasion comporte : des moyens pour obtenir la carte de référence ; des moyens pour recevoir de la station de surveillance l'information représentative de la position d'intrusion et des instructions de déplacement jusqu'à la position d'intrusion ; des moyens pour déterminer une trajectoire à suivre, d'après la carte de référence, pour déplacer ledit véhicule de dissuasion jusqu'à la position d'intrusion ; des moyens pour suivre automatiquement la trajectoire déterminée ; des moyens pour détecter des obstacles imprévus lors du déplacement dudit véhicule sur le terrain et pour adapter la trajectoire déterminée, afin de contourner les obstacles imprévus détectés. Ainsi, il est possible de surveiller un terrain donné, plus particulièrement un terrain de golf, de détecter d'éventuelles intrusions et de réagir aux intrusions de sorte à les faire cesser, et ce manière simple et efficace.

Selon un mode de réalisation particulier, la station de surveillance comporte des moyens pour obtenir une information de géolocalisation chaque véhicule de dissuasion, et le système est configuré pour considérer que l'intrusion détectée est une fausse alerte lorsque la position d'intrusion correspond à la géolocalisation d'un dit véhicule de dissuasion. Ainsi, la performance du système est accrue vis-à-vis de fausses alertes.

Selon un mode de réalisation particulier, au moins un dit véhicule de dissuasion comporte des moyens pour effectuer des rondes sur le terrain lorsque ledit véhicule de dissuasion ne se déplace pas jusqu'à une position d'intrusion sur instructions de la station de surveillance. Ainsi, le système dispose d'un effet dissuasif renforcé (dissuader des individus malveillants d'effectuer des intrusions sur le terrain).

Selon un mode de réalisation particulier, la station de surveillance comporte des moyens pour définir les rondes de sorte à renforcer la surveillance de lieux du terrain où des intrusions ont été précédemment détectées par ladite station de surveillance. Ainsi, des intrusions répétées sont évitées.

Selon un mode de réalisation particulier, ledit au moins un capteur de surveillance est une caméra thermique. Ainsi, le système est efficace de jour comme de nuit, et permet de parer des techniques de camouflage.

Selon un mode de réalisation particulier, le terrain est un terrain de golf et au moins un dit véhicule de dissuasion est une voiturette de golf. Ainsi, le système ne dénature pas le terrain à surveiller.

Selon un mode de réalisation particulier, le terrain est un terrain golf et au moins un dit véhicule de dissuasion est un drone. Ainsi, les interventions sur des positions d'intrusion sont plus rapides.

Selon un mode de réalisation particulier, au moins un dit véhicule de dissuasion est équipé de projecteurs lumineux et/ou d'avertisseurs sonores, activés au moins lorsque ledit véhicule de dissuasion se déplace jusqu'à une position d'intrusion. Ainsi, l'effet dissuasif est renforcé.

Selon un mode de réalisation particulier, au moins un dit véhicule de dissuasion est équipé d'une caméra de type PTZ, la caméra de type PTZ étant activée à partir du moment où ledit véhicule de dissuasion se déplace jusqu'à la position d'intrusion, et en ce que ledit véhicule de dissuasion comporte des moyens pour transmettre à la station de surveillance des images en temps-réel prises par la caméra de type PTZ. Ainsi, des preuves d'une intrusion constatée peuvent être facilement obtenues.

Selon un mode de réalisation particulier, la station de surveillance comporte une interface utilisateur permettant de définir, dans la carte de référence, des zones à éviter sur le terrain, en ce que la station de surveillance transmet la carte de référence ainsi définie à chaque véhicule de dissuasion, et les trajectoires de chaque véhicule de dissuasion est calculée de sorte à éviter lesdites zones. Ainsi, le système est particulièrement adapté à surveiller un terrain comportant des obstacles permanents.

L'invention concerne également un procédé de surveillance d'un terrain, effectué par un système de surveillance comportant une station de surveillance et au moins un capteur de surveillance placé sur un point haut de sorte à couvrir ledit terrain, ledit au moins un capteur de surveillance fournissant à la station de surveillance des images en temps-réel du terrain, la station de surveillance analysant des images successives reçues dudit au moins un capteur de surveillance en recherchant des différences entre lesdites images successives pour détecter des mouvements représentatifs d'une intrusion sur le terrain. Le système de surveillance du terrain comporte en outre au moins un véhicule de dissuasion connecté par une liaison sans-fil avec la station de surveillance, et la station de surveillance effectue les étapes suivantes : obtenir une carte de référence représentative de la géométrie du terrain ; lorsque la station de surveillance détecte un mouvement représentatif d'une intrusion sur le terrain dans les images reçues dudit au moins un capteur de surveillance, retrouver dans lesdites images des repères géo-référencés du terrain et déterminer une position d'intrusion dans le terrain à partir desdites images et des positions desdits repères géo-référencés dans la carte de référence ; transmettre à au moins un dit véhicule de dissuasion une information représentative de la position d'intrusion déterminée et des instructions de déplacement dudit véhicule de dissuasion jusqu'à la position d'intrusion déterminée. De plus, chaque véhicule de dissuasion effectue les étapes suivantes : obtenir la carte de référence ; recevoir de la station de surveillance l'information représentative de la position d'intrusion et des instructions de déplacement jusqu'à la position d'intrusion ; déterminer une trajectoire à suivre, d'après la carte de référence, pour déplacer ledit véhicule de dissuasion jusqu'à la position d'intrusion ; suivre automatiquement la trajectoire déterminée ; et détecter des obstacles imprévus lors du déplacement dudit véhicule sur le terrain et pour adapter la trajectoire déterminée, afin de contourner les obstacles imprévus détectés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de surveillance de terrain, comme par exemple un terrain de golf, comportant une station de surveillance, au moins un capteur de surveillance et au moins un véhicule de dissuasion, selon au moins un mode de réalisation de l'invention ;
- la Fig. 2 illustre schématiquement un exemple d'architecture matérielle d'un organe de contrôle de la station de surveillance ;
- la Fig. 3 illustre schématiquement un exemple d'architecture matérielle d'un organe de contrôle d'un dit capteur de surveillance ;
- la Fig. 4 illustre schématiquement un exemple d'architecture matérielle d'un organe de contrôle d'un dit véhicule de dissuasion ;
- la Fig. 5 illustre schématiquement un algorithme, implémenté par la station de surveillance, pour surveiller ledit terrain, selon au moins un mode de réalisation de l'invention ;
- la Fig. 6 illustre schématiquement un algorithme, implémenté par la station de surveillance, pour réagir à une détection d'intrusion sur ledit terrain, selon au moins un mode de réalisation de l'invention ;
- la Fig. 7 illustre schématiquement une architecture modulaire, implémentée par la station de surveillance, dans le cadre de la surveillance dudit terrain, selon au moins un mode de réalisation de l'invention ; et
- la Fig. 8 illustre schématiquement une architecture modulaire, implémentée par un dit véhicule de dissuasion, dans le cadre de la surveillance dudit terrain, selon au moins un mode de réalisation de l'invention.

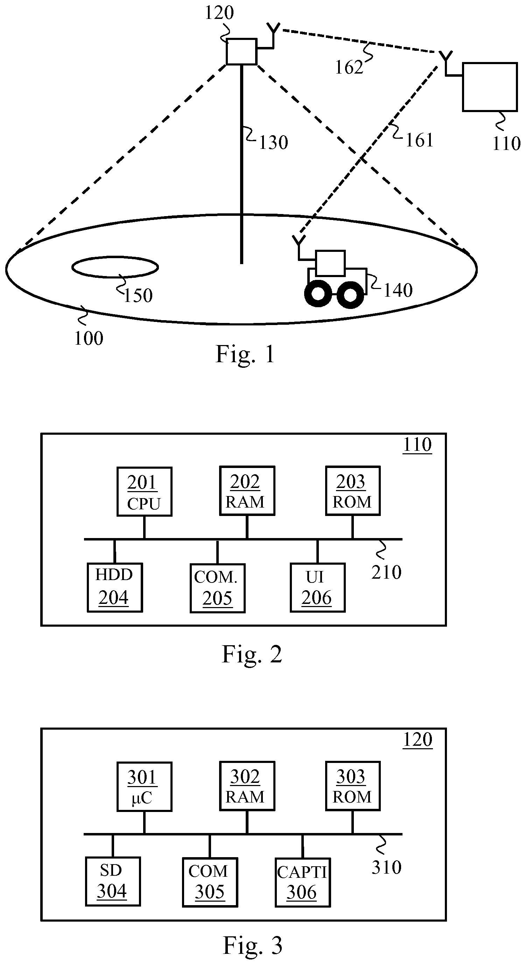

La Fig. 1 illustre schématiquement un système de surveillance de terrain, comme par exemple un terrain de golf, selon au moins un mode de réalisation de l'invention.

Le système de surveillance schématiquement représenté sur la Fig. 1 est destiné à surveiller un terrain 100 et à réagir en cas de détection d'intrusion sur ledit terrain 100. Le système de surveillance schématiquement représenté sur la Fig. 1 est préférentiellement configuré pour surveiller un terrain de golf, mais peut aussi être configuré pour surveiller un terrain d'un autre type.

Le système de surveillance comporte une station de surveillance 110, au moins un capteur de surveillance 120 et au moins un véhicule de dissuasion 140.

Ledit au moins un capteur de surveillance 120 est placé sur un point haut au dessus du terrain 100, de manière à ce que l'ensemble du terrain 100 à surveiller soit couvert par la portée dudit au moins un capteur de surveillance 120. A noter que le terrain 100 à surveiller peut n'être qu'une partie d'un terrain plus vaste, par exemple le terrain 100 n'est qu'une partie d'un terrain de golf.

Pour placer ledit au moins un capteur de surveillance 120 suffisamment haut pour permettre de couvrir l'ensemble du terrain 100 à surveiller, un mât 130 peut être utilisé pour fixer en hauteur un ou plusieurs dits capteurs de surveillance 120. Lorsque le terrain 100 est un terrain de golf, un dit mât 130 d'une hauteur de 20 mètres est approprié dans une majorité de cas d'espèce. Ledit au moins un capteur de surveillance 120 est configuré pour capter des images des images en temps-réel dudit terrain 100 et pour les transmettre à la station de surveillance 110. Ledit au moins un capteur de surveillance 120 est préférentiellement une caméra thermique, de sorte à pouvoir fonctionner de nuit sans besoin d'éclairage particulier sur le terrain 100.

Ledit au moins un véhicule de dissuasion 140 est destiné à se déplacer de manière autonome (sans conducteur), sur ordre de la station de surveillance 110, sur un lieu du terrain 100 où a été détecté une intrusion par la station de surveillance 110 grâce audit au moins un capteur de surveillance 120. En d'autres termes, ledit au moins un véhicule de dissuasion 140 suit automatiquement une trajectoire prédéterminée. Cela permet d'obtenir un effet dissuasif vis-à-vis de l'intrusion.

Dans un mode de réalisation particulier, au moins un dit véhicule de dissuasion 140 est configuré pour effectuer des rondes de surveillance sur le terrain 100, et, sur ordre de la station de surveillance 110, pour se déplacer automatiquement sur un lieu du terrain 100 où a été détecté une intrusion par la station de surveillance 110 grâce audit au moins un capteur de surveillance 120. Cela renforce l'effet dissuasif.

Lorsque le terrain 100 est un terrain de golf, ledit au moins un véhicule de dissuasion 140 est préférentiellement une voiturette de golf effectuant des déplacements de manière autonome (sans conducteur). L'effet dissuasif est ainsi renforcé, en laissant croire à une présence humaine sur le terrain 100. Au moins un drone peut aussi faire office de véhicule de dissuasion 140. Des véhicules de dissuasion 140 de différents types peuvent être utilisés, en associant par exemple au moins une voiturette de golf et au moins un drone.

Des zones prédéfinies 150 du terrain 100 peuvent être à éviter par ledit au moins un véhicule de dissuasion 140. Un repérage de ces zones prédéfinies 150 du terrain 100 est alors utilisé pour permettre de déterminer quelle trajectoire doit emprunter ledit au moins un véhicule de dissuasion 140 afin d'éviter lesdites zones prédéfinies 150 (bâtiments, plan d'eau, arbres, greens de terrain de golf, bunkers de terrain de golf,...) lors de ses déplacements sur le terrain 100. Cet aspect est détaillé par la suite.

Ledit au moins un véhicule de dissuasion 140 est préférentiellement équipé de projecteurs lumineux, e.g. phares, de sorte à éclairer une partie de l'environnement dudit véhicule de dissuasion 140. Ces projecteurs lumineux sont préférentiellement activés lorsque ledit au moins un véhicule de dissuasion se déplace, sur instructions de la station de surveillance 110, vers une position d'intrusion. Ces projecteurs lumineux peuvent aussi être activés lors des rondes. Un capteur de luminosité peut aussi être utilisé pour activer les projecteurs lumineux uniquement la nuit. Ledit au moins un véhicule de dissuasion 140 peut aussi être équipé d'avertisseurs sonores, activés lorsque ledit au moins un véhicule de dissuasion se déplace, sur instructions de la station de surveillance 110, vers une position d'intrusion. Ces avertisseurs sonores peuvent aussi être activés lors des rondes. Ledit au moins un véhicule de dissuasion 140 embarque préférentiellement au moins une caméra, afin de permettre d'obtenir des images en temps-réel d'une partie de l'environnement dudit véhicule de dissuasion 140, et ainsi permettre d'obtenir des images sur site d'une éventuelle intrusion détectée sur le terrain 100. Cela permet notamment d'effectuer des vérifications d'alerte (fausse alerte versus alerte véritable), d'obtenir d'éventuelles précisions sur la nature de l'alerte, et également d'obtenir d'éventuelles preuves (flagrant-délit, etc.) d'une intrusion avérée. Par exemple, une caméra de type PTZ (« Pan, Tilt, Zoom» en anglais) largement répandu dans le monde de la télésurveillance peut être utilisée. Ledit au moins un véhicule de dissuasion 140 est en outre équipé de capteurs destinés à détecter des obstacles imprévus lors de ses déplacements et ainsi permettre d'enclencher une procédure d'évitement. Par exemple, en considérant une voiturette de golf : ledit au moins un véhicule de dissuasion 140 est équipé de détecteurs sonars sur les côtés et à l'arrière dudit véhicule, comme largement répandu dans le monde de l'assistance au stationnement ; et ledit au moins un véhicule de dissuasion 140 est équipé à l'avant de détecteurs laser LiDAR (« Light Détection And Ranging » en anglais) permettant de détecter un obstacle et d'en évaluer la distance, par analyse des propriétés d'un faisceau de lumière. Un premier détecteur laser LiDAR peut être placé en position basse pour détecter les obstacles au sol et un second détecteur laser LiDAR peut être placé en position haute pour détecter les obstacles à hauteur d'habitacle dudit au moins un véhicule de dissuasion 140. Lorsque ledit au moins un véhicule 140 détecte ainsi, grâce à ces capteurs, une présence d'obstacle à une distance inférieure à un seuil prédéfini, une procédure d'évitement est déclenchée. La trajectoire dudit au moins un véhicule de dissuasion 140 est alors modifiée pour contourner l'obstacle. Cet aspect est détaillé par la suite.

Ledit au moins un véhicule de dissuasion 140 est équipé d'un dispositif de géolocalisation, par exemple de type GPS (« Global Positioning System » en anglais), afin d'en connaître la position sur le terrain 100. Ledit au moins un capteur de surveillance peut aussi être équipé d'un tel dispositif de géolocalisation, afin d'en connaître la position sur le terrain 100. Il est aussi possible d'utiliser des modules de géolocalisation relative, pour permettre de connaître la position relative dudit au moins un véhicule de dissuasion 140 par rapport audit au moins un capteur de surveillance 120, en utilisant une approche cinématique temps réel RTK (pour « Real Time Kinematic » en anglais). Une information de géolocalisation relative dudit au moins un véhicule de dissuasion 140 par rapport audit au moins un capteur de surveillance 120 est ainsi obtenue, permettant d'atteindre une précision de l'ordre de trois centimètres. Une information de géolocalisation absolue dudit au moins un véhicule de dissuasion 140 peut, en variante, être utilisée pour permettre de situer ledit au moins un véhicule de dissuasion 140 sur le terrain 100.

Ledit au moins un véhicule de dissuasion 140 et la station de surveillance 110 sont respectivement équipés d'interfaces de communication radio leur permettant d'échanger des informations et permettant notamment à la station de surveillance 110 d'envoyer des instructions audit au moins un véhicule de dissuasion 140. Par exemple, ledit au moins un véhicule de dissuasion 140 et la station de surveillance 110 utilisent une liaison sans-fil 161 de type Wi-Fi.

Ledit au moins un capteur de surveillance 120 et la station de surveillance 110 sont respectivement équipés d'interfaces de communication leur permettant d'échanger des informations et permettant notamment audit au moins un capteur de surveillance 120 d'envoyer des images capturées à ladite station de surveillance 110. Par exemple, ledit au moins un capteur de surveillance 120 et la station de surveillance 110 sont équipés d'interfaces de communication radio et utilisent une liaison sans-fil 162 de type Wi-Fi. Une liaison filaire, par exemple de type Ethernet, peut en variante être utilisée. Par la suite, il est considéré que la liaison 162 est une liaison sans-fil.

Des relais peuvent être disposés sur le terrain 100 afin de permettre d'assurer les liaisons sans-fil 161 et 162 en tout point du terrain 100.

Ledit au moins un capteur de surveillance 120 et ledit au moins un véhicule de dissuasion 140 peuvent être respectivement équipés d'interfaces de communication radio leur permettant d'échanger directement des informations (sans passer par la station de surveillance 110), notamment pour connaître la position relative dudit au moins un véhicule de dissuasion 140 par rapport audit au moins un capteur de surveillance 120, en utilisant une approche cinématique temps réel RTK. Par exemple, ledit au moins un véhicule de dissuasion 140 et ledit au moins un capteur de surveillance 120 utilisent une liaison sans-fil (non représentée) de type Wi-Fi.

La structure du système de surveillance décrit ci-dessus en relation avec la Fig. 1 s'intègre aisément dans le terrain 100, et ne dénature pas ledit terrain 100, ce qui est particulièrement important lorsque le terrain est un terrain de loisir comme l'est un terrain de golf.

La **Fig. 2** illustre schématiquement un exemple d'architecture matérielle d'un organe de contrôle de la station de surveillance 110.

L'organe de contrôle de la station de surveillance 110 comporte alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage 204 ou un lecteur de support de stockage, tel qu'un disque dur HDD (« Hard Disk Drive » en anglais) ; un ensemble d'interfaces COM 205 permettant de communiquer avec, d'une part, ledit au moins un capteur de surveillance 120, et avec, d'autre part, ledit au moins un véhicule de dissuasion ; et une interface utilisateur UI («User Interface» en anglais) 206 permettant à la station de surveillance 110 d'afficher des informations à un utilisateur et permettant à l'utilisateur de fournir des informations. L'interface utilisateur 206 est notamment utilisée pour définir une carte de référence représentative de la géométrie du terrain 100 à surveiller, pour définir des zones à éviter 150 sur le terrain 100, pour définir des repères géo-référencés sur le terrain, et pour alerter d'une éventuelle intrusion dans le terrain 100.

Le processeur 201 est capable d'exécuter des instructions chargées dans la RAM 202 à partir de la ROM 203, d'une mémoire externe, d'un support de stockage, ou d'un réseau de communication. Lorsque la station de surveillance 110 est mise sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ci-après en relation avec la station de surveillance 110.

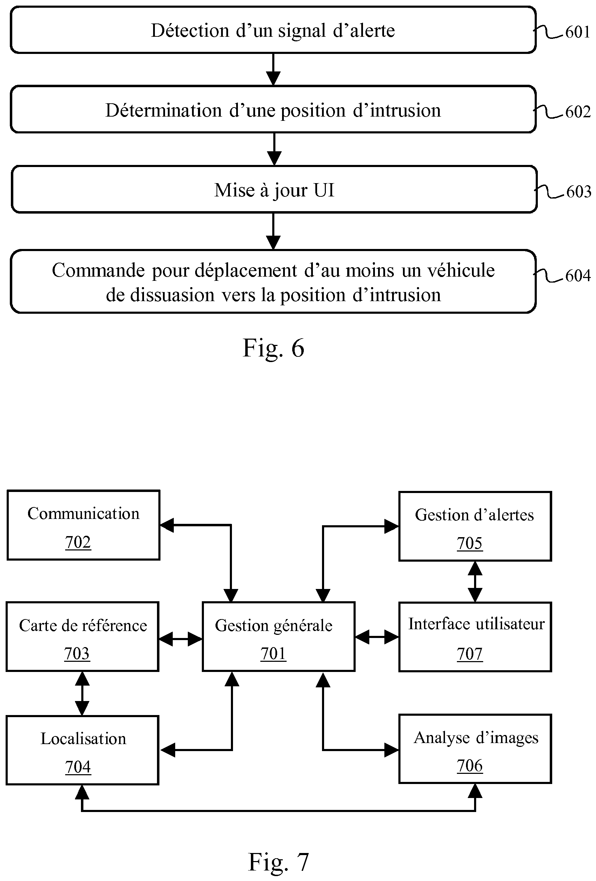

Tout ou partie des algorithmes et étapes décrits ci-après en relation avec la station de surveillance 110 peut ainsi être implémenté sous forme logicielle par exécution d'un ensemble d'instructions par une machine programmable, tel qu'un DSP (« Digital Signal Processor » en anglais) ou un processeur, ou être implémenté sous forme matérielle par une machine ou un composant dédié, tel qu'un FPGA (« Field-Programmable Gate Array » en anglais) ou un ASIC (« Application-Specific Integrated Circuit » en anglais). Chaque module représenté au sein de l'architecture modulaire de la Fig. 7 décrite ci-après peut ainsi correspondre à une implémentation logicielle ou à une implémentation matérielle. Cela signifie notamment que seule une partie de ces modules pourrait être implémentée sous forme logicielle, alors que le reste desdits modules serait implémenté sous forme matérielle.

La **Fig. 3** illustre schématiquement un exemple d'architecture matérielle d'un organe de contrôle dudit au moins un capteur de surveillance 120.

L'organe de contrôle du capteur de surveillance 120 considéré comporte alors, reliés par un bus de communication 310 : un microcontrôleur µC 301 ; une mémoire vive RAM 302 ; une mémoire morte ROM 303 ; une unité de stockage 304 ou un lecteur de support de stockage, tel qu'un lecteur de cartes SD (« Secure Digital » en anglais) ; une interface COM 305 permettant de communiquer avec la station de surveillance 110 ; et au moins un organe de capture d'images CAPTI 306.

Le microcontrôleur µC 301 est capable d'exécuter des instructions chargées dans la RAM 302 à partir de la ROM 303, d'une mémoire externe (tel qu'une carte SD), d'un support de stockage, ou d'un réseau de communication. Lorsque le capteur de surveillance 120 considéré est mis sous tension, le microcontrôleur µC 301 est capable de lire de la RAM 302 des instructions et de les exécuter. Ces instructions forment un programme d'ordinateur causant l'implémentation, par le microcontrôleur µC 301, d'étapes nécessaires à la capture d'images par l'organe de capture d'images CAPTI 306 et à l'envoi des images capturées à la station de surveillance 110. Le programme d'ordinateur peut aussi causer l'implémentation, par le microcontrôleur µC 301, d'étapes complémentaires, comme par exemple d'étapes nécessaires à la mise en place de la liaison sans-fil 162.

Tout ou partie de ces étapes peut ainsi être implémenté sous forme logicielle par exécution d'un ensemble d'instructions par une machine programmable, tel qu'un DSP ou un microcontrôleur, ou être implémenté sous forme matérielle par une machine ou un composant dédié, tel qu'un FPGA ou un ASIC.

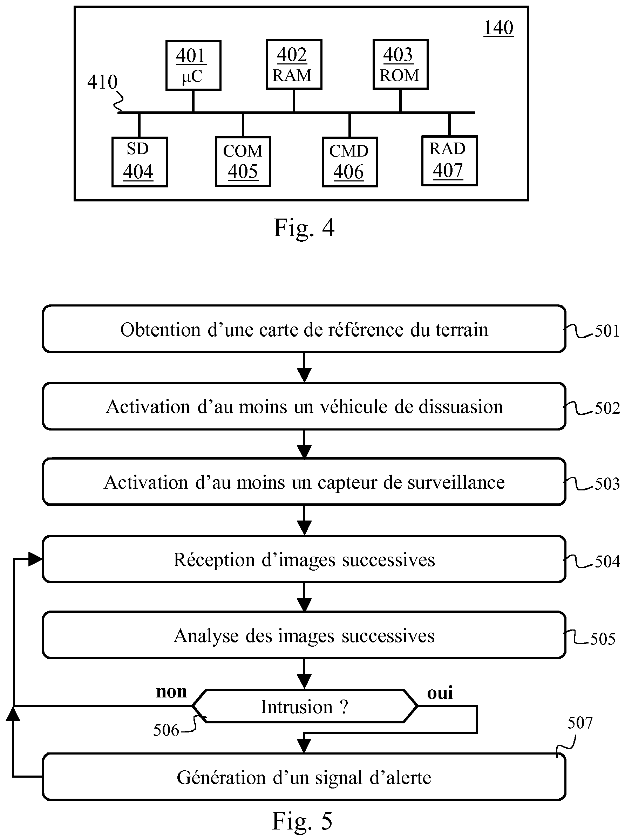

La **Fig. 4** illustre schématiquement un exemple d'architecture matérielle d'un organe de contrôle dudit au moins un véhicule de dissuasion 140.

L'organe de contrôle du véhicule de dissuasion 140 considéré comporte alors, reliés par un bus de communication 410 : un microcontrôleur µC 401 ; une mémoire vive RAM 402 ; une mémoire morte ROM 403 ; une unité de stockage 404 ou un lecteur de support de stockage, tel qu'un lecteur de cartes SD ; une interface COM 405 permettant de communiquer avec la station de surveillance 110; un organe de commande CMD 406 du véhicule de dissuasion 140 ; et au moins un organe de radar laser RAD 407. L'organe de commande CMD 406 permet de diriger le véhicule de dissuasion 140 lors de ses déplacements sur le terrain 100, et peut aussi permettre de faire appliquer des commandes complémentaires, notamment activer / désactiver un signal sonore et/ou activer / désactiver les projecteurs lumineux déjà mentionnés et/ou activer / désactiver la capture d'images par la caméra embarquée sur le véhicule de dissuasion considéré 140. L'organe de radar laser RAD 407 est un ensemble de capteurs utilisés pour détecter des obstacles imprévus lors du déplacement du véhicule de dissuasion considéré 140 sur le terrain 100 et ainsi permettre d'enclencher au besoin une procédure d'évitement.

Le microcontrôleur µC 401 est capable d'exécuter des instructions chargées dans la RAM 402 à partir de la ROM 403, d'une mémoire externe (tel qu'une carte SD), d'un support de stockage, ou d'un réseau de communication. Lorsque le véhicule de dissuasion 140 considéré est mis sous tension, le microcontrôleur µC 401 est capable de lire de la RAM 402 des instructions et de les exécuter. Ces instructions forment un programme d'ordinateur causant l'implémentation, par le microcontrôleur µC 401, d'étapes nécessaires à la réception d'instructions de déplacement de la part de la station de surveillance 110, d'étapes nécessaires pour permettre de déplacer ledit véhicule de dissuasion 140 considéré sur le terrain 100. Le programme d'ordinateur peut aussi causer l'implémentation, par le microcontrôleur µC 301, d'étapes complémentaires, comme par exemple d'étapes nécessaires à la mise en place de la liaison sans-fil 162 et/ou d'étapes nécessaires à l'envoi, à destination de la station de surveillance 110, d'images en temps-réel captées par la caméra embarquée sur le véhicule de dissuasion considéré 140.

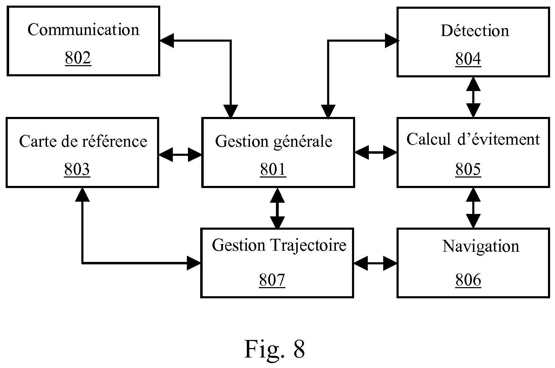

Tout ou partie des étapes décrits ci-après en relation avec ledit au moins un capteur de surveillance 120 peut ainsi être implémenté sous forme logicielle par exécution d'un ensemble d'instructions par une machine programmable, tel qu'un DSP ou un microcontrôleur, ou être implémenté sous forme matérielle par une machine ou un composant dédié, tel qu'un FPGA ou un ASIC. Chaque module représenté au sein de l'architecture modulaire de la Fig. 8 décrite ci-après peut ainsi correspondre à une implémentation logicielle ou à une implémentation matérielle. Cela signifie notamment que seule une partie de ces modules pourrait être implémentée sous forme logicielle, alors que le reste desdits modules serait implémenté sous forme matérielle.

La **Fig. 5** illustre schématiquement un algorithme, implémenté par la station de surveillance 110 (plus particulièrement l'organe de contrôle de la station de surveillance 110), pour surveiller le terrain 100, selon au moins un mode de réalisation de l'invention.

Dans une étape 501, la station de surveillance 110 obtient une carte de référence représentative de la géométrie du terrain. La carte de référence contient des repères géo-référencés sur le terrain 100 permettant, par trigonométrie, d'obtenir la géolocalisation de tout point du terrain 100, ainsi que de toute zone prédéfinie 150 du terrain 100 devant être évitée par ledit au moins un véhicule de dissuasion 140. Un référencement selon le système géodésique mondial dans sa révision de 1984, appelé WGS84 (« World Geodetic System 1984 » en anglais) est par exemple utilisé. Ledit au moins un capteur de surveillance 120 peut servir de tel repère ; ledit au moins un capteur de surveillance 120 pouvant être équipé d'un dispositif de géolocalisation, la station de surveillance 110 peut obtenir la géolocalisation dudit au moins un capteur de surveillance 120 via la liaison sans-fil 161. La station de surveillance 110 peut fournir, via son interface utilisateur UI, les moyens à un utilisateur de définir la carte de référence, d'entrer des informations de géolocalisation de repères significatifs dans la carte de référence, de définir des zones 150 à éviter par ledit au moins un véhicule de dissuasion 140. Tout ou partie de la carte de référence peut aussi être fournie par l'utilisateur au moyen d'un fichier rendu accessible à la station de surveillance 110 par le biais d'un support de stockage, ou d'une mémoire externe, ou d'un réseau de communication.

Ledit au moins un véhicule de dissuasion 140 doit posséder un exemplaire de la carte de référence, afin de permettre audit au moins un véhicule de dissuasion 140 de se déplacer de manière autonome sur le terrain 100. Soit la carte de référence est transmise par la station de surveillance 110 audit au moins un véhicule de dissuasion 140, soit la carte de référence est fournie audit au moins un véhicule de dissuasion 140 par l'utilisateur au moyen d'un fichier rendu accessible audit au moins un véhicule de dissuasion par le biais d'un support de stockage, ou d'une mémoire externe, ou d'un réseau de communication.

Dans une étape 502, la station de surveillance 110 active au moins un véhicule de dissuasion 140. En d'autres termes, ledit au moins un véhicule de dissuasion 140 est en veille et écoute la liaison sans-fil 161 pour décider si ledit au moins un véhicule de dissuasion 140 doit être rendu actif sur sollicitation de la station de surveillance 110 via ladite liaison sans-fil 161. Après activation dudit au moins un véhicule de dissuasion 140, la station de surveillance 110 est capable de fournir via la liaison sans-fil 161 différentes informations nécessitées par l'initialisation dudit au moins un véhicule de dissuasion 140, comme par exemple la carte de référence et/ou le descriptif de ronde.

En variante, l'activation dudit au moins un véhicule de dissuasion 140 est effectuée par l'utilisateur. S'établit alors la liaison sans-fil 161 avec la station de surveillance 110, ce qui permet à la station de surveillance 110 de fournir audit au moins un véhicule de dissuasion 140 les différentes informations nécessitées par l'initialisation dudit au moins un véhicule de dissuasion 140.

Au moins un dit véhicule de dissuasion 140 peut en outre être instruit, par la station de surveillance 110, d'entamer une ronde sur le terrain 110. La ronde est un circuit, dont un descriptif est soit envoyé par la station de surveillance 110 audit au moins un véhicule de dissuasion 140, soit préenregistré au sein dudit au moins un véhicule de dissuasion 140. Le descriptif en question correspond à des points référencés sur la carte de référence par lesquels le véhicule de dissuasion 140 est supposé passer lors de la ronde (un déclenchement de procédure d'évitement pouvant toutefois empêcher ledit véhicule de dissuasion 140 de passer effectivement par au moins un desdits points et entraîner une définition de trajectoire alternative).

Dans une étape 503, la station de surveillance 110 active ledit au moins un capteur de surveillance 120. En d'autres termes, ledit au moins un capteur de surveillance 120 est en veille et écoute la liaison sans-fil 162 pour décider si ledit au moins un capteur de surveillance 120 doit être rendu actif sur sollicitation de la station de surveillance 110 via ladite liaison sans-fil 162. Après activation dudit au moins un capteur de surveillance 120, la station de surveillance 110 est capable de fournir via la liaison sans-fil 162 différentes informations nécessitées par l'initialisation dudit au moins un capteur de surveillance 120.

En variante, l'activation dudit au moins un capteur de surveillance 120 est effectuée par l'utilisateur. S'établit alors la liaison sans-fil 162 avec la station de surveillance 110, ce qui permet à la station de surveillance 110 de fournir audit au moins un capteur de surveillance 120 les différentes informations nécessitées par l'initialisation dudit au moins un capteur de surveillance 120.

L'activation dudit au moins un capteur de surveillance 120 entraîne une capture par ledit au moins un capteur de surveillance 120 d'images du terrain 100, ainsi que l'établissement d'une transmission de flux vidéo incluant lesdites images depuis ledit au moins un capteur de surveillance 120 jusqu'à la station de surveillance 110.

Dans une étape 504, la station de surveillance 110 reçoit les images du terrain 100 transmises par ledit au moins un capteur de surveillance 120.

Dans une étape 505, la station de surveillance 110 analyse les images reçues à l'étape 504 de manière à détecter une éventuelle intrusion sur le terrain 100. La station de surveillance recherche des différences entre des images successives pour détecter, dans les images capturées par ledit au moins un capteur de surveillance 120, des mouvements représentatifs d'une intrusion sur le terrain 100. Les principes de détection de mouvement implémentés dans les caméras PTZ peuvent être utilisés pour ce faire.

Dans une étape 506, la station de surveillance 110 vérifie si une intrusion est détectée dans le cadre de l'analyse des images transmises par ledit au moins un capteur de surveillance 120. Si tel est le cas, une étape 507 est effectuée ; sinon, l'étape 504 est réitérée.

Dans un mode de réalisation particulier, afin d'éviter de fausses alarmes, la station de surveillance 110 vérifie, préalablement à l'étape 507, si l'intrusion est détectée à une position sur le terrain 100 correspondant à la géolocalisation d'un dit véhicule de dissuasion 140 sur le terrain 100. Si tel est le cas, l'étape 504 est réitérée ; sinon l'étape 507 est effectuée.

Dans l'étape 507, la station de surveillance 110 génère un signal d'alerte représentatif du fait qu'une intrusions a été détectée. Ce signal d'alerte est plus particulièrement traité dans le cadre de l'algorithme de la Fig. 6 décrit ci-après, selon un mode de réalisation particulier de l'invention. Le signal d'alerte peut uniquement consister en un signal interne à l'organe de contrôle de la station de surveillance 110. Le signal d'alerte peut, en variante, être un signal propagé par la station de surveillance 110. Selon un premier exemple, le signal d'alerte est un signal sonore destiné à avertir l'utilisateur. Selon un second exemple, le signal d'alerte est une indication visuelle affichée sur une interface graphique de la station de surveillance 110. Selon un troisième exemple, le signal d'alerte est un message envoyé par un réseau de communication, tel qu'un message SMS (« Short Messaging System » en anglais) envoyé à un numéro d'appel pré-renseigné au sein de la station de surveillance 110 (lorsque la station de surveillance 110 est dotée d'une interface de communication avec un réseau cellulaire adapté à l'envoi de messages SMS). Le signal d'alerte peut être une combinaison de ces exemples.

La **Fig. 6** illustre schématiquement un algorithme, implémenté par la station de surveillance 110, pour réagir à une détection d'intrusion sur le terrain 100, selon au moins un mode de réalisation de l'invention. L'algorithme de la Fig. 6 est donc préférentiellement un procédé exécuté en parallèle de celui de la Fig. 5, ce qui permet de continuer à détecter d'autres éventuelles intrusions sur le terrain 100 tout en intervenant sur celle(s) déjà détectée(s) et ayant déclenché l'exécution du procédé de l'algorithme de la Fig. 6.

Dans une étape 601, la station de surveillance 110 détecte le signal d'alerte généré à l'étape 507.

Dans une étape 602, la station de surveillance 110 détermine une position d'intrusion, c'est-à-dire une position géographique au sein du terrain 100 où a été détectée la potentielle intrusion qui a entraîné la génération du signal d'alerte. La position d'intrusion est déterminée à partir des images reçues à l'étape 504 et à partir desquelles la potentielle intrusion sur le terrain 100 a été détectée, ainsi qu'à partir des positions des repères significatifs définis dans la carte de référence. En retrouvant dans les images reçues à l'étape 504 lesdits repères significatifs définis dans la carte de référence, il est possible par éventuel recalage, puis par trigonométrie, de repérer la position de l'intrusion par rapport auxdits repères significatifs et ainsi déterminer la position de l'intrusion dans la carte de référence.

Dans une étape 603, la station de surveillance 110 effectue une mise à jour de l'interface utilisateur UI. Cette mise à jour consiste à signaler la potentielle intrusion à l'utilisateur, avec préférentiellement une information représentative de la position sur le terrain 100 où a été détectée l'intrusion. Par exemple, l'interface utilisateur UI est une interface graphique GUI (« Graphical User Interface » en anglais) sur laquelle une cartographie du terrain 100 est affichée et la mise à jour consiste à afficher une information représentative d'une position sur le terrain 100, ou d'un secteur dudit terrain 100, où la potentielle intrusion a été détectée. L'interface graphique GUI peut aussi être mise à jour par affichage en outre des images reçues à l'étape 504 ayant permis de détecter la potentielle intrusion. L'alerte générée peut aussi être inscrit dans un journal de bord (« log file » en anglais), préférentiellement en association avec des informations décrivant l'intrusion détectée.

Dans une étape 604, la station de surveillance 110 envoie une commande à au moins un dit véhicule de dissuasion 140 pour rejoindre la position sur le terrain 100, ou le secteur dudit terrain 100, où la potentielle intrusion a été détectée. La station de surveillance 110 envoie ainsi à chaque véhicule de dissuasion 140 concerné une information représentative de ladite position sur le terrain 100, ou dudit secteur dudit terrain 100. Chaque véhicule de dissuasion 140 concerné définit alors la trajectoire que ledit véhicule de dissuasion 140 concerné doit suivre pour rejoindre ladite position sur le terrain 100, ou ledit secteur du terrain 100, à partir de la position dudit véhicule de dissuasion 140 concerné au moment où la commande est reçue et de l'endroit du terrain 100 à rejoindre. Par exemple, le calcul de trajectoire peut s'effectuer grâce à des calculs de sommes de Minkowski, comme par exemple décrit au 13^{e} chapitre de l'ouvrage « Computational Geometry: Algorithms and Applications », M. de Berg et al, 3rd Edition, 2008, Springer Berlin Heidelberg. ISBN: 978-3-540-77973-5. Un autre exemple consiste à découper la carte de référence en secteurs, et à retenir un point notable de chaque secteur tel que le barycentre dudit secteur. Les trajectoires à travers le terrain 100 sont alors déterminées en s'appuyant sur ces points notables, que l'on appelle points de passage (« waypoints » en anglais). Un algorithme de Djikstra peut être alors utilisé pour déterminer la trajectoire à emprunter depuis une position courante jusqu'à l'endroit du terrain 100 à rejoindre, en passant par desdits points de passage. Etant donné que la carte de référence comporte des repères géolocalisés, les distances séparant les points de passage peuvent être déterminées par trigonométrie et servir de pondération dans le cadre de l'algorithme de Djikstra. La trajectoire ainsi calculée est convertie en commandes de navigation, et la géolocalisation du véhicule de dissuasion 140 concerné permet d'asservir les commandes de navigation sur la trajectoire voulue. Des procédures d'évitement en cas d'obstacle imprévu sur le trajet peuvent faire dériver ledit véhicule de dissuasion 140 de la trajectoire initialement calculée, et une nouvelle trajectoire est alors calculée en prenant en compte un contournement de l'obstacle détecté.

Chaque véhicule de dissuasion 140 concerné par l'étape 604 peut aussi allumer ses projecteurs lumineux (si ce n'est déjà fait) lors de son déplacement pour rejoindre la position indiquée par la station de surveillance 110. Chaque véhicule de dissuasion 140 concerné peut aussi activer sa caméra embarquée lors de son déplacement pour rejoindre la position indiquée par la station de surveillance 110.

L'interface utilisateur UI de la station de surveillance 110 est configurée pour permettre à l'utilisateur de lever le signal d'alerte. La station de surveillance 110 en informe chaque véhicule de dissuasion 140 envoyé sur un lieu d'intrusion détectée, de sorte à ce que ledit véhicule de dissuasion 140 reparte pour une ronde ou rentre dans un lieu de stationnement prédéfini sur le terrain 100. Chaque véhicule de dissuasion 140 peut alors désactiver sa caméra embarquée. La nouvelle trajectoire à emprunter par ledit véhicule de dissuasion 140 est déterminée comme déjà expliqué. La station de surveillance 110 peut par ailleurs adapter les rondes de sorte à ce que soit renforcée la surveillance de lieux du terrain 100 où des intrusions ont été précédemment détectées.

La Fig. 7 illustre schématiquement une architecture modulaire, implémentée par la station de surveillance 110, selon au moins un mode de réalisation de l'invention. La Fig. 7 illustre plus particulièrement une architecture modulaire de l'organe de contrôle de la station de surveillance 110, que cet organe de contrôle soit implémenté sous forme logicielle ou matérielle (comme déjà mentionné en relation avec la Fig. 2).

La station de surveillance 110 comporte un module de gestion générale 701 en charge de coordonner les différentes actions et différents traitements effectués par la station de surveillance 110.

La station de surveillance 110 comporte en outre un module de communication 702 en charge d'assurer les communications via les liaisons sans-fil 161 et 162.

La station de surveillance 110 comporte en outre un module de gestion d'alertes 705 en charge de gérer le signal d'alerte qui est généré en cas d'éventuelle intrusion détectée sur le terrain 100.

La station de surveillance 110 comporte en outre un module d'interface utilisateur 707 permettant d'interagir avec l'utilisateur. Le module d'interface utilisateur 707 peut aussi interagir avec le module de gestion d'alertes 705 afin d'afficher une information représentative du signal d'alerte en cas d'éventuelle intrusion détectée sur le terrain 100.

La station de surveillance 110 comporte en outre un module de mise à disposition de la carte de référence 703 en charge de permettre à l'utilisateur de fournir la carte de référence et/ou de définir la carte de référence. Le module de mise à disposition de la carte de référence 703 est alors en charge de stocker la carte de référence. Le module de mise à disposition de la carte de référence 703 peut en outre être en charge de permettre à l'utilisateur de modifier la carte de référence, par exemple par des interactions via le module d'interface utilisateur 707, notamment pour définir des zones 150 à éviter par ledit au moins un véhicule de dissuasion 140. Le module de gestion générale 701 est alors en charge de transmettre la carte de référence audit au moins un véhicule de dissuasion 140 grâce au module de communication 702, et d'assurer que ledit au moins un véhicule de dissuasion 140 dispose d'une version de la carte de référence qui est à jour.

La station de surveillance 110 comporte en outre un module d'analyse d'images 706 en charge de traiter les images reçues dudit au moins un capteur de surveillance 120. Le module d'analyse d'images 706 est alors en charge de rechercher les différences entre les images successives reçues dudit au moins un capteur de surveillance 120. Le module de gestion générale 701 est alors en charge d'assurer que les images sont effectivement reçues dudit au moins un capteur de surveillance 120 et de les fournir au module d'analyse d'images 706. Le module d'analyse d'images 706 est alors en charge d'informer le module de gestion générale 701 d'une détection d'éventuelle intrusion sur le terrain 100 au cours de l'analyse desdites images. Le module de gestion générale 701 est alors en charge d'en informer le module de gestion d'alertes 705.

La station de surveillance 110 comporte en outre un module de localisation 704 en charge de déterminer, lorsqu'une éventuelle intrusion a été détectée, à quelle position sur le terrain 100 ou dans quel secteur du terrain 100 l'intrusion a été détectée. Le module de localisation 704 s'appuie, pour ce faire, sur la carte de référence et plus particulièrement sur les repères significatifs définis dans la carte de référence. Le module de localisation 704 est alors en charge de fournir au module de gestion générale 701 une information représentative de ladite position ou dudit secteur où l'intrusion a été détectée. Le module de gestion générale 701 est alors en charge d'en informer au moins un véhicule de dissuasion 140 grâce au module de communication 702.

La Fig. 8 illustre schématiquement une architecture modulaire, implémentée par un dit véhicule de dissuasion 140, selon au moins un mode de réalisation de l'invention. La Fig. 8 illustre plus particulièrement une architecture modulaire de l'organe de contrôle du véhicule de dissuasion 140 considéré, que cet organe de contrôle soit implémenté sous forme logicielle ou matérielle (comme déjà mentionné en relation avec la Fig. 4).

Le véhicule de dissuasion 140 considéré comporte un module de gestion générale 801 en charge de coordonner les différentes actions et différents traitements effectués par le véhicule de dissuasion 140 considéré.

Le véhicule de dissuasion 140 considéré comporte en outre un module de communication 802 en charge d'assurer les communications via la liaison sans-fil 162.

Le véhicule de dissuasion 140 considéré comporte en outre un module de mise à disposition de la carte de référence 803 en charge de récupérer la carte de référence auprès de la station de surveillance 110, de stocker la carte de référence, et d'assurer que la version détenue de la carte de référence est à jour.

Le véhicule de dissuasion 140 considéré comporte en outre un module de gestion de trajectoire 807 en charge de déterminer une trajectoire au sein du terrain 100 pour permettre au véhicule de dissuasion 140 d'atteindre une position donnée du terrain 100. Cette position à atteindre est notamment une position intermédiaire dans une ronde qu'effectue le véhicule de dissuasion 140, ou une position à laquelle une potentielle intrusion a été détectée.

Le véhicule de dissuasion 140 considéré comporte en outre un module de détection d'obstacles 804 en charge de détecter des obstacles imprévus lorsque le véhicule de dissuasion 140 progresse sur le terrain 100.

Le véhicule de dissuasion 140 considéré comporte en outre un module de calcul d'évitement d'obstacles 805 en charge de déterminer une trajectoire de contournement d'un obstacle détecté en cours de progression du véhicule de dissuasion 140 sur le terrain 100. Le module de détection d'obstacles 804 est alors en charge d'enclencher une procédure d'évitement et de fournir au module de calcul d'évitement d'obstacles 805 une information représentative de la position de l'obstacle détecté par rapport au véhicule de dissuasion 140. Le module de calcul d'évitement d'obstacles 805 utilise par exemple des modèles d'évitement afin de déterminer une trajectoire de contournement de l'obstacle, en fonction de la position dudit obstacle par rapport au véhicule de dissuasion 140.

Le véhicule de dissuasion 140 considéré comporte en outre un module de navigation 806 en charge de diriger le véhicule de dissuasion 140 pour le faire progresser sur le terrain 100. Le module de navigation 806 est alors en charge d'assurer que le véhicule de dissuasion 140 suive la trajectoire définie par le module de gestion de trajectoire 807. Lorsqu'une procédure d'évitement est déclenchée, le module de calcul d'évitement d'obstacles 805 est alors en charge de fournir au module de navigation 806 des instructions afin d'assurer que le véhicule de dissuasion 140 suive la trajectoire de contournement de l'obstacle (ce qui préempte la trajectoire définie précédemment par le module de gestion de trajectoire 807). De plus, lorsqu'une procédure d'évitement a été déclenchée, le module de navigation 806 ou le module de calcul d'évitement d'obstacles 805 en informe le module de gestion de trajectoire 807 de sorte à ce qu'une nouvelle trajectoire soit définie pour prendre en compte le fait que le véhicule de dissuasion 140 s'est écarté de la trajectoire précédemment définie afin d'effectuer un contournement d'obstacle imprévu.

Pour permettre de diriger le véhicule de dissuasion 140 considéré sur le terrain 100 en fonction d'une trajectoire prédéterminée, des librairies et outils développés dans le cadre de ROS (« Robot Operating System » en anglais) peuvent être utilisés, notamment la librairie appelée « navigation stack » (pile de navigation). Pour permettre de prendre en compte des obstacles imprévus, cette librairie peut être enrichie grâce au plugiciel (« plug-in » en anglais) appelé « teb_local_planner » de ROS s'appuyant sur une approche appelée « Timed-Elastic-Band » présentée notamment dans les documents « Trajectory modification considering dynamic constraints of autonomous robots », C. Rösmann et al, Proc. 7th German Conférence on Robotics, Germany, Munich, 2012, pp. 74-79, et «Efficient trajectory optimization using a sparse model », C. Rösmann et al, Proc. IEEE European Conférence on Mobile Robots, Spain, Barcelona, 2013, pp. 138-143. De plus, la librairie appelée « robot_localization » de ROS peut être utilisée pour localiser le véhicule de dissuasion 140 dans la carte de référence. Ces librairies peuvent être complétées par d'autres librairies de ROS ou des fonctionnalités natives du système d'exploitation de ROS.

## Revendications

1. Système de surveillance d'un terrain (100), comportant une station de surveillance (110) et au moins un capteur de surveillance (120) placé sur un point haut de sorte à couvrir ledit terrain, ledit au moins un capteur de surveillance comportant des moyens pour fournir à la station de surveillance des images en temps-réel du terrain, la station de surveillance comportant des moyens pour analyser (505) des images successives reçues dudit au moins un capteur de surveillance en recherchant des différences entre lesdites images successives pour détecter des mouvements représentatifs d'une intrusion sur le terrain,
**caractérisé en ce que** le système de surveillance du terrain comporte en outre au moins un véhicule de dissuasion (140) connecté par une liaison sans-fil (161) avec la station de surveillance ;
et **en ce que** la station de surveillance comporte :
- des moyens pour obtenir (501) une carte de référence (703) représentative de la géométrie du terrain ;
- des moyens (704) pour, lorsque la station de surveillance détecte un mouvement représentatif d'une intrusion sur le terrain dans les images reçues dudit au moins un capteur de surveillance, retrouver dans lesdites images des repères géo-référencés du terrain et déterminer (602) une position d'intrusion dans le terrain à partir desdites images et des positions desdits repères géo-référencés dans la carte de référence ;
- des moyens (702) pour transmettre (604) à au moins un dit véhicule de dissuasion une information représentative de la position d'intrusion déterminée et des instructions de déplacement dudit véhicule de dissuasion jusqu'à la position d'intrusion déterminée ;
et **en ce que** chaque véhicule de dissuasion comporte :
- des moyens pour obtenir la carte de référence (803) ;
- des moyens (802) pour recevoir de la station de surveillance l'information représentative de la position d'intrusion et des instructions de déplacement jusqu'à la position d'intrusion ;
- des moyens (807) pour déterminer une trajectoire à suivre, d'après la carte de référence, pour déplacer ledit véhicule de dissuasion jusqu'à la position d'intrusion ;
- des moyens (806) pour suivre automatiquement la trajectoire déterminée ; et
- des moyens (804, 805) pour détecter des obstacles imprévus lors du déplacement dudit véhicule sur le terrain et pour adapter la trajectoire déterminée, afin de contourner les obstacles imprévus détectés.

2. Système selon la revendication 1, **caractérisé en ce que** la station de surveillance comporte des moyens pour obtenir une information de géolocalisation chaque véhicule de dissuasion, et **en ce que** le système est configuré pour considérer que l'intrusion détectée est une fausse alerte lorsque la position d'intrusion correspond à la géolocalisation d'un dit véhicule de dissuasion.

3. Système selon l'une quelconque des revendications 1 et 2, **caractérisé en ce qu'**au moins un dit véhicule de dissuasion comporte des moyens pour effectuer des rondes sur le terrain lorsque ledit véhicule de dissuasion ne se déplace pas jusqu'à une position d'intrusion sur instructions de la station de surveillance.

4. Système selon la revendication 3, **caractérisé en ce que** la station de surveillance comporte des moyens pour définir les rondes de sorte à renforcer la surveillance de lieux du terrain où des intrusions ont été précédemment détectées par ladite station de surveillance.

5. Système selon l'une quelconque des revendications 1 à 4, **caractérisé en ce que** ledit au moins un capteur de surveillance est une caméra thermique.

6. Système selon l'une quelconque des revendications 1 à 5, **caractérisé en ce que** le terrain est un terrain de golf et au moins un dit véhicule de dissuasion est une voiturette de golf.

7. Système selon l'une quelconque des revendications 1 à 6, **caractérisé en ce que** le terrain est un terrain golf et au moins un dit véhicule de dissuasion est un drone.

8. Système selon l'une quelconque des revendications 1 à 7, **caractérisé en ce qu'**au moins un dit véhicule de dissuasion est équipé de projecteurs lumineux et/ou d'avertisseurs sonores, activés au moins lorsque ledit véhicule de dissuasion se déplace jusqu'à une position d'intrusion.

9. Système selon l'une quelconque des revendications 1 à 8, **caractérisé en ce qu'**au moins un dit véhicule de dissuasion est équipé d'une caméra de type PTZ, la caméra de type PTZ étant activée à partir du moment où ledit véhicule de dissuasion se déplace jusqu'à la position d'intrusion, et **en ce que** ledit véhicule de dissuasion comporte des moyens pour transmettre à la station de surveillance des images en temps-réel prises par la caméra de type PTZ.

10. Système selon l'une quelconque des revendications 1 à 9, **caractérisé en ce que** la station de surveillance comporte une interface utilisateur permettant de définir, dans la carte de référence, des zones (150) à éviter sur le terrain, **en ce que** la station de surveillance transmet la carte de référence ainsi définie à chaque véhicule de dissuasion, et **en ce que** les trajectoires de chaque véhicule de dissuasion est calculée de sorte à éviter lesdites zones.

11. Procédé de surveillance d'un terrain (100), effectué par un système de surveillance comportant une station de surveillance (110) et au moins un capteur de surveillance (120) placé sur un point haut de sorte à couvrir ledit terrain, ledit au moins un capteur de surveillance fournissant à la station de surveillance des images en temps-réel du terrain, la station de surveillance analysant (505) des images successives reçues dudit au moins un capteur de surveillance en recherchant des différences entre lesdites images successives pour détecter des mouvements représentatifs d'une intrusion sur le terrain,
**caractérisé en ce que** le système de surveillance du terrain comporte en outre au moins un véhicule de dissuasion (140) connecté par une liaison sans-fil (161) avec la station de surveillance ;
et **en ce que** la station de surveillance effectue les étapes suivantes :
- obtenir une carte de référence (703) représentative de la géométrie du terrain ;
- lorsque la station de surveillance détecte un mouvement représentatif d'une intrusion sur le terrain dans les images reçues dudit au moins un capteur de surveillance, retrouver dans lesdites images des repères géo-référencés du terrain et déterminer (602) une position d'intrusion dans le terrain à partir desdites images et des positions desdits repères géo-référencés dans la carte de référence ;
- transmettre (604) à au moins un dit véhicule de dissuasion une information représentative de la position d'intrusion déterminée et des instructions de déplacement dudit véhicule de dissuasion jusqu'à la position d'intrusion déterminée ;
et **en ce que** chaque véhicule de dissuasion effectue les étapes suivantes :
- obtenir la carte de référence (803) ;
- recevoir de la station de surveillance l'information représentative de la position d'intrusion et des instructions de déplacement jusqu'à la position d'intrusion ;
- déterminer une trajectoire à suivre, d'après la carte de référence, pour déplacer ledit véhicule de dissuasion jusqu'à la position d'intrusion ;
- suivre automatiquement la trajectoire déterminée ;
- détecter des obstacles imprévus lors du déplacement dudit véhicule sur le terrain et pour adapter la trajectoire déterminée, afin de contourner les obstacles imprévus détectés.

## Patentansprüche

1. System zur Überwachung eines Geländes (100), das eine Überwachungsstation (110) und mindestens einen Überwachungssensor (120) aufweist, der an einem hohen Punkt angeordnet ist, um das Gelände abzudecken, wobei der mindestens eine Überwachungssensor Einrichtungen aufweist, um der Überwachungsstation Echtzeit-Bilder des Geländes zu liefern, wobei die Überwachungsstation Einrichtungen aufweist, um vom mindestens einem Überwachungssensor empfangene aufeinanderfolgende Bilder zu analysieren (505), indem Unterschiede zwischen den aufeinanderfolgenden Bildern gesucht werden, um für ein Eindringen auf das Gelände repräsentative Bewegungen zu erfassen,
**dadurch gekennzeichnet, dass** das Überwachungssystem des Geländes außerdem mindestens ein Abschreckungsgefährt (140) aufweist, das durch eine drahtlose Verbindung (161) mit der Überwachungsstation verbunden ist;
und dass die Überwachungsstation aufweist:
- Einrichtungen zum Erhalt (501) einer für die Geometrie des Geländes repräsentativen Referenzkarte (703);
- Einrichtungen (704) um, wenn die Überwachungsstation eine für ein Eindringen auf das Gelände repräsentative Bewegung in den von dem mindestens einen Überwachungssensor empfangenen Bildern erfasst, georeferenzierte Fixpunkte des Geländes in den Bildern zu finden, und zum Bestimmen (602) einer Eindringposition im Gelände ausgehend von den Bildern und den Positionen der georeferenzierten Fixpunkte in der Referenzkarte;
- Einrichtungen (702) zur Übertragung (604) einer für die bestimmte Eindringposition repräsentativen Information und von Anweisungen zur Bewegung des Abschreckungsgefährts bis zur bestimmten Eindringposition an mindestens ein Abschreckungsgefährt;
und dass jedes Abschreckungsgefährt aufweist:
- Einrichtungen zum Erhalt der Referenzkarte (803);
- Einrichtungen (802) zum Empfang der für die Eindringposition repräsentativen Information und der Anweisungen zur Bewegung bis zur Eindringposition von der Überwachungsstation;
- Einrichtungen (807) zur Bestimmung eines zu verfolgenden Kurses gemäß der Referenzkarte, um das Abschreckungsgefährt bis zur Eindringposition zu bewegen;
- Einrichtungen (806) zur automatischen Verfolgung des bestimmten Kurses; und
- Einrichtungen (804, 805) zur Erfassung unerwarteter Hindernisse bei der Bewegung des Gefährts auf dem Gelände und zur Anpassung des bestimmten Kurses, um die erfassten unerwarteten Hindernisse zu umgehen.

2. System nach Anspruch 1, **dadurch gekennzeichnet, dass** die Überwachungsstation Einrichtungen aufweist, um eine Geolokalisierungsinformation jedes Abschreckungsgefährts zu erhalten, und dass das System konfiguriert ist, davon auszugehen, dass das erfasste Eindringen ein Fehlalarm ist, wenn die Eindringposition der Geolokalisierung eines Abschreckungsgefährts entspricht.

3. System nach einem der Ansprüche 1 und 2, **dadurch gekennzeichnet, dass** mindestens ein Abschreckungsgefährt Einrichtungen aufweist, um Runden auf dem Gelände auszuführen, wenn das Abschreckungsgefährt sich nicht auf Anweisung von der Überwachungsstation bis zu einer Eindringposition bewegt.

4. System nach Anspruch 3, **dadurch gekennzeichnet, dass** die Überwachungsstation Einrichtungen aufweist, um die Runden zu definieren, um die Überwachung von Stellen des Geländes zu verstärken, wo Eindringvorgänge vorher von der Überwachungsstation erfasst wurden.

5. System nach einem der Ansprüche 1 bis 4, **dadurch gekennzeichnet, dass** der mindestens eine Überwachungssensor eine Wärmekamera ist.

6. System nach einem der Ansprüche 1 bis 5, **dadurch gekennzeichnet, dass** das Gelände ein Golfplatz und mindestens ein Abschreckungsgefährt ein Golfwagen ist.

7. System nach einem der Ansprüche 1 bis 6, **dadurch gekennzeichnet, dass** das Gelände ein Golfplatz und mindestens ein Abschreckungsgefährt eine Drohne ist.

8. System nach einem der Ansprüche 1 bis 7, **dadurch gekennzeichnet, dass** mindestens ein Abschreckungsgefährt mit Scheinwerfern und/oder akustischen Warngeräten ausgestattet ist, die mindestens dann aktiviert werden, wenn das Abschreckungsgefährt sich bis zu einer Eindringposition bewegt.

9. System nach einem der Ansprüche 1 bis 8, **dadurch gekennzeichnet, dass** mindestens ein Abschreckungsgefährt mit einer Kamera des Typs PTZ ausgestattet ist, wobei die Kamera des Typs PTZ ab dem Moment aktiviert wird, in dem das Abschreckungsgefährt sich bis zur Eindringposition bewegt, und dass das Abschreckungsgefährt Einrichtungen aufweist, um Echtzeit-Bilder an die Überwachungsstation zu übertragen, die von der Kamera des Typs PTZ aufgenommen wurden.

10. System nach einem der Ansprüche 1 bis 9, **dadurch gekennzeichnet, dass** die Überwachungsstation eine Benutzerschnittstelle aufweist, die es ermöglicht, in der Referenzkarte auf dem Gelände zu vermeidende Zonen (150) zu definieren, dass die Überwachungsstation die so definierte Referenzkarte an jedes Abschreckungsgefährt überträgt, und dass die Kurse jedes Abschreckungsgefährts so berechnet werden, dass die Zonen vermieden werden.

11. Verfahren zur Überwachung eines Geländes (100), ausgeführt von einem Überwachungssystem, das eine Überwachungsstation (110) und mindestens einen Überwachungssensor (120) aufweist, der an einem hohen Punkt angeordnet ist, um das Gelände abzudecken, wobei der mindestens eine Überwachungssensor der Überwachungsstation Echtzeit-Bilder des Geländes liefert, wobei die Überwachungsstation vom mindestens einem Überwachungssensor empfangene aufeinanderfolgende Bilder analysiert (505), indem Unterschiede zwischen den aufeinanderfolgenden Bildern gesucht werden, um für ein Eindringen auf das Gelände repräsentative Bewegungen zu erfassen,
**dadurch gekennzeichnet, dass** das Überwachungssystem des Geländes außerdem mindestens ein Abschreckungsgefährt (140) aufweist, das durch eine drahtlose Verbindung (161) mit der Überwachungsstation verbunden ist;
und dass die Überwachungsstation die folgenden Schritte ausführt:
- Erhalt einer für die Geometrie des Geländes repräsentativen Referenzkarte (703);
- wenn die Überwachungsstation eine für ein Eindringen auf das Gelände repräsentative Bewegung in den vom mindestens einen Überwachungssensor empfangenen Bildern erfasst, Finden von georeferenzierten Fixpunkten des Geländes in den Bildern und Bestimmen (602) einer Eindringposition im Gelände ausgehend von den Bildern und den Positionen der georeferenzierten Fixpunkte in der Referenzkarte;
- Übertragen (604) einer für die bestimmte Eindringposition repräsentativen Information und von Anweisungen zur Bewegung des Abschreckungsgefährts bis zur bestimmten Eindringposition an mindestens ein Abschreckungsgefährt;
und dass jedes Abschreckungsgefährt die folgenden Schritte ausführt:
- Erhalt der Referenzkarte (803);
- Empfang der für die Eindringposition repräsentativen Information und der Anweisungen zur Bewegung bis zur Eindringposition von der Überwachungsstation;
- Bestimmen eines zu verfolgenden Kurses, gemäß der Referenzkarte, um das Abschreckungsgefährt bis zur Eindringposition zu bewegen;
- automatisches Verfolgen des bestimmten Kurses;
- Erfassen von unvorhergesehenen Hindernissen bei der Bewegung des Gefährts auf dem Gelände und zum Anpassen des bestimmten Kurses, um die erfassten unvorhergesehenen Hindernisse zu umgehen.

## Claims

1. System for monitoring a piece of land (100), comprising a monitoring station (110) and at least one monitoring sensor (120) placed at a high point so as to cover said piece of land, said at least one monitoring sensor comprising means for delivering, to the monitoring station, real-time images of the piece of land, the monitoring station comprising means (505) for analysing successive images received from said at least one monitoring sensor by searching for differences between said successive images so as to detect movements representative of an intrusion onto the piece of land,
**characterized in that** the system for monitoring the piece of land furthermore comprises at least one dissuasive vehicle (140) connected by a wireless link (161) to the monitoring station;
and **in that** the monitoring station comprises:
- means (501) for obtaining a reference map (703) representative of the geometry of the piece of land;
- means (704) for, when the monitoring station detects a movement representative of an intrusion onto the piece of land in the images received from said at least one monitoring sensor, finding, in said images, georeferenced landmarks of the piece of land and determining (602) an intrusion position on the piece of land from said images and from the positions of said georeferenced landmarks on the reference map;
- means (702) for transmitting (604) to at least one said dissuasive vehicle information representative of the determined intrusion position and instructions to move said dissuasive vehicle to the determined intrusion position;
and **in that** each dissuasive vehicle comprises:
- means for obtaining the reference map (803);
- means (802) for receiving, from the monitoring station, the information representative of the intrusion position and the instructions to move to the intrusion position;
- means (807) for determining a path to follow, from the reference map, so as to move said dissuasive vehicle to the intrusion position;
- means (806) for automatically following the determined path; and
- means (804, 805) for detecting unexpected obstacles during the movement of said vehicle over the piece of land and for adapting the determined path, in order to circumvent the detected unexpected obstacles.

2. System according to Claim 1, **characterized in that** the monitoring station comprises means for obtaining information on the geolocation of each dissuasive vehicle, and **in that** the system is configured to consider the detected intrusion to be a false alarm when the intrusion position corresponds to the geolocation of a said dissuasive vehicle.

3. System according to any one of Claims 1 and 2, **characterized in that** at least one said dissuasive vehicle comprises means for performing patrols on the piece of land when said dissuasive vehicle is not moving to an intrusion position on instructions from the monitoring station.

4. System according to Claim 3, **characterized in that** the monitoring station comprises means for defining the patrols so as to reinforce the monitoring of sites of the piece of land where intrusions have been detected beforehand by said monitoring station.

5. System according to any one of Claims 1 to 4, **characterized in that** said at least one monitoring sensor is a thermal camera.

6. System according to any one of Claims 1 to 5, **characterized in that** the piece of land is a golf course and at least one said dissuasive vehicle is a golf cart.

7. System according to any one of Claims 1 to 6, **characterized in that** the piece of land is a golf course and at least one said dissuasive vehicle is a drone.

8. System according to any one of Claims 1 to 7, **characterized in that** at least one said dissuasive vehicle is equipped with lights and/or klaxons, which are activated when said dissuasive vehicle is moving to an intrusion position.

9. System according to any one of Claims 1 to 8, **characterized in that** at least one said dissuasive vehicle is equipped with a PTZ camera, the PTZ camera being activated from the moment when said dissuasive vehicle begins to move to the intrusion position, and **in that** said dissuasive vehicle comprises means for transmitting, to the monitoring station, real-time images taken by the PTZ camera.

10. System according to any one of Claims 1 to 9, **characterized in that** the monitoring station comprises a user interface allowing, on the reference map, regions (150) to be avoided on the piece of land to be defined, **in that** the monitoring station transmits the refence map thus defined to each dissuasive vehicle, and **in that** the paths of each dissuasive vehicle is computed so as to avoid said regions.

11. Method for monitoring a piece of land (100), performed by a monitoring system comprising a monitoring station (110) and at least one monitoring sensor (120) placed at a high point so as to cover said piece of land, said at least one monitoring sensor delivering, to the monitoring station, real-time images of the piece of land, the monitoring station analysing (505) successive images received from said at least one monitoring sensor by searching for differences between said successive images so as to detect movements representative of an intrusion onto the piece of land,
**characterized in that** the system for monitoring the piece of land furthermore comprises at least one dissuasive vehicle (140) connected by a wireless link (161) to the monitoring station;
and **in that** the monitoring station performs the following steps:
- obtaining a reference map (703) representative of the geometry of the piece of land;
- when the monitoring station detects a movement representative of an intrusion onto the piece of land in the images received from said at least one monitoring sensor, finding, in said images, georeferenced landmarks of the piece of land and determining (602) an intrusion position on the piece of land from said images and from the positions of said georeferenced landmarks on the reference map;
- transmitting (604) to at least one said dissuasive vehicle information representative of the determined intrusion position and instructions to move said dissuasive vehicle to the determined intrusion position;
and **in that** each dissuasive vehicle performs the following steps:
- obtaining the reference map (803);
- receiving, from the monitoring station, the information representative of the intrusion position and the instructions to move to the intrusion position;
- determining a path to follow, from the reference map, so as to move said dissuasive vehicle to the intrusion position;
- automatically following the determined path;
- detecting unexpected obstacles during the movement of said vehicle over the piece of land and adapting the determined path, in order to circumvent the detected unexpected obstacles.
